# EUROPEAN PATENT SPECIFICATION

(11) **EP 2 341 385 B1**
(45) Date of publication and mention of the grant of the patent: **17.07.2019**
(21) Application number: 10015440.0
(22) Date of filing: 08.12.2010
(51) Int. Cl.: G02B 21/36

(54) **Image processing system, image processing apparatus, image pickup apparatus, method, and computer-readable medium**
Bildverarbeitungssystem, Bildverarbeitungsvorrichtung, Bildaufnahmevorrichtung, Verfahren und computerlesbares Medium
Système de traitement d'images, appareil de traitement d'images, appareil de capture d'images et support lisible par un ordinateur

(30) Priority: 16.12.2009 JP 2009285154
(43) Date of publication of application: 06.07.2011
(73) Proprietor: Sony Corporation, Tokyo 108-0075 (JP)
(72) Inventor: Oshima, Takuya, Tokyo 108-0075 (JP); Mizutani, Yoichi, Tokyo 108-0075 (JP); Wakita, Yoshihiro, Tokyo 108-0075 (JP); Kyusojin, Hiroshi, Tokyo 108-0075 (JP); Narusawa, Ryu, Tokyo 108-0075 (JP)
(74) Representative: Müller Hoffmann & Partner

(56) References cited:
- WO-A2-01/84209
- US-A1- 2006 204 072
- US-B1- 6 724 419

## Description

### BACKGROUND

In a field of medicine, pathology, or the like, there has been proposed a system that digitizes an image of an object to be observed such as a cell, a tissue, an organ, or the like of a living body, that is obtained by an optical microscope, to examine the tissue or the like or diagnose a patient by a doctor or a pathologist based on the digitized image. The above-mentioned system is generally called a virtual microscope system.

For example, Japanese Patent Application Laid-open No. 2009-37250 (hereinafter, referred to as Patent Document 1) discloses a method in which an image optically obtained from a slide specimen placed on a stage of a microscope is digitized by a video camera with a CCD (charge coupled device), a digital signal thereof is input to a PC (personal computer), and the image is visualized on a monitor. A pathologist performs examination or the like while viewing the image displayed on the monitor (see, for example, paragraphs [0027] and [0028] and Fig. 5 of Patent Document 1).

In the virtual microscope system, raw data of an image obtained by an image pickup apparatus is transferred to a PC (image processing apparatus) via a bus. Here, to directly store the raw date in an HDD (hard disk drive) of the PC is difficult in terms of a writing speed of the HDD. In view of this, it is conceivable that the PC stores the raw data in the HDD after subjecting the raw data to various image processing such as a developing process and a compression process to a predetermined format including a JPEG format or the like.

However, in the case where the image pickup apparatus continuously takes images of different regions of an observation target object while the observation target is being moved on a stage and the PC processes the images in real time, if the PC is overloaded, there may arise a fear that a defect is caused in part of the image data during the transfer of the raw data from the image pickup apparatus side to the computer side.

US 6 724 419 B1 discloses an automated microscope system, a computer program product in a computer readable medium and a method for acquiring images at substantially the maximum acquisition rate of a camera while and as devices external to the camera, which vary various parameters of the acquired images, operate asynchronously with the camera so as to allow the acquired images to be displayed as a sequence that shows continuous variation in the acquisition parameters.

US 2006/204072 A1 discloses an imaging apparatus that may find an area in which a specimen is present, then focus on the specimen and capture images of the specimen during continuous stage motion.

WO 01/84209 A2 discloses an apparatus for and method of fully automatic rapid scanning and digitizing of an entire microscope sample using a computer controlled microscope slide scanner for composing the image strips obtained from successive scans of the sample into a single contiguous digital image. The method provides for statically displaying sub-regions of this large digital image at different magnifications, together with a reduced magnification macro-image of the entire sample. The method also provides for dynamically displaying portions of the contiguous digital image. All elements of the scanner are in single-enclosure with a primary connection to the Internet or to a local intranet. The sample type is a microscope slide with illumination and imaging optics consistent with transmission mode optics for diffraction-limited digital imaging.

In particular, in the field of medicine, an image treated with the virtual microscope is directly linked to a pathological diagnosis. Therefore, not only the defect in data but also a partial complement to the image is not permitted. In addition, if the defect in the data is caused, the image data can be transmitted again from the image pickup apparatus side to the PC side. However, in this case, a wasted band and a latency time are caused by an amount corresponding to the image in which the defect is caused.

### SUMMARY

The present invention is defined by an image processing method and a program for processing image information obtained by a microscope in a field of medicine, pathology, biology, materials science, or the like according to the subject-matter of the independent claims.

According to the present invention, it is possible to process the image data in real time as much as possible while preventing the defect in the image data that is continuously transferred from the image pickup apparatus side to the image processing apparatus side.

These and other objects, features and advantages of the present disclosure will become more apparent in light of the following detailed description of best mode embodiments thereof, as illustrated in the accompanying drawings.

### BRIEF DESCRIPTION OF THE FIGURES

Fig. 1 is a diagram showing the outline of an example image processing system according to an example embodiment of the present disclosure.
Fig. 2 is a block diagram showing a hardware structure of an example image pickup apparatus and an interface therearound in the example image processing system according to the example embodiment of the present disclosure.
Fig. 3 is a block diagram showing the hardware structure of an example PC according to the example embodiment of the present disclosure.
Fig. 4 is a diagram showing the flow of image processing in the example PC according to the example embodiment of the present disclosure.
Fig. 5 is a flowchart showing an image pickup process by the image pickup apparatus and the PC according to the example embodiment of the present disclosure.
Fig. 6 is a block diagram showing an example control system in the image pickup process by the image pickup apparatus and the PC according to the example embodiment of the present disclosure.
Fig. 7 is a timing chart showing an example image pickup timing and the like in the image pickup process of a system according to the example embodiment of the present disclosure.
Fig. 8 is an example timing chart showing the case where a back pressure process is generated in the image pickup process shown in Fig. 7.
Fig. 9 is an example timing chart showing an image pickup timing and the like in the image pickup process of a system according to another example embodiment of the present disclosure.
Fig. 10 is an example timing chart showing the case where a back pressure process is generated in the image pickup process shown in Fig. 9.
Additional features and advantages are described herein, and will be apparent from the following Detailed Description and the figures.

### DETAILED DESCRIPTION

Hereinafter, exemplary embodiments of the present disclosure will be described in detail with reference to the drawings.

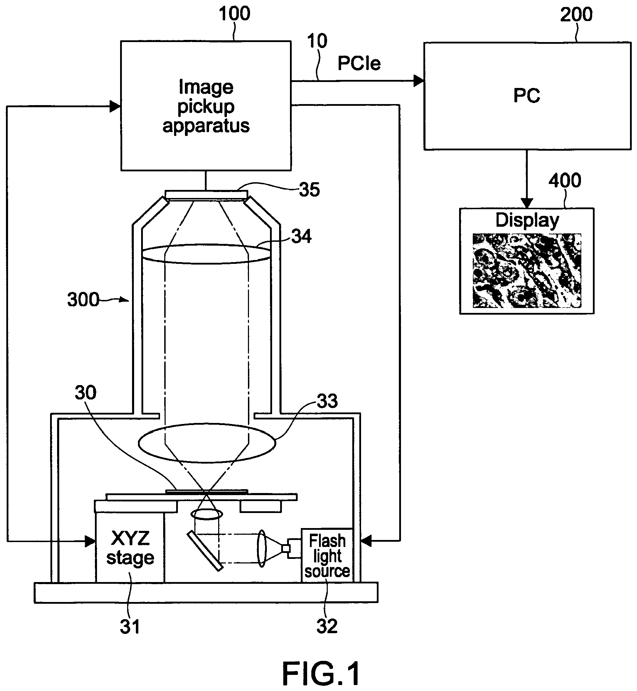

Fig. 1 is a diagram showing the outline of an example image processing system according to an example embodiment of the present disclosure. As shown in Fig. 1, the image processing system includes an image pickup apparatus 100 and a PC 200. The image pickup apparatus 100 is connected with a microscope 300 to control an operation of the microscope 300 and read an image taken.

The microscope 300 includes an XYZ stage 31. On the XYZ stage 31, a specimen 30 as an observation target object is placed movably in X, Y, and Z directions. The movement of the XYZ stage 31 is controlled by a stage control unit provided to the image pickup apparatus 100. The specimen 30 is, for example, a pathological specimen 30. A sliced tissue or organ of a human body is bonded on a slide glass, stained, and formed into a preparation form.

On a lower-side area of the XYZ stage 31, a flash light source 32 and an illumination optical system are provided. The flash light source 32 irradiates the specimen 30 with light for generating an optical image as an image pickup target. The illumination optical system collects light from the flash light source 32 to the specimen 30. The image pickup apparatus 100 also controls the operation of the flash light source 32.

Above the XYZ stage 31, an objective lens 33, an image forming lens 34, and a CMOS (complementary metal oxide semiconductor) substrate 35 are disposed in the stated order from the specimen 30 side. The objective lens 33 collects light that has passed through the specimen 30 to form an optical image of the specimen 30. The optical image is formed on a CMOS sensor mounted on the CMOS substrate 35 by the image forming lens 34 through a light guiding optical system (not shown).

The CMOS substrate 35 includes the CMOS sensor and an electronic shutter or a mechanical shutter that is interlocked with the flash light source 32. The CMOS sensor continuously obtains, as image data, the formed optical images of the specimen 30 by performing photoelectric conversion each time the XYZ stage 31 is moved. Instead of the CMOS sensor, another image sensor such as a CCD (charge coupled device) image sensor may be used.

The images as raw data sequentially obtained by the CMOS sensor are read by the image pickup apparatus 100 and sequentially transferred to the PC 200. The image pickup apparatus 100 and the PC 200 are connected to each other via a PCIe bus 10 serving as a high-speed communication channel having bidirectionality and reliability. The PC 200 performs various image processing on the images to store the images, and displays the images after the image processing on a display 400 that is externally connected to the PC 200. A manager of the PC 200 views the images that have been subjected to the image processing and are displayed on the display, thereby checking the quality thereof, for example.

The PC 200 is connected with another PC (not shown) as a viewer via a network. An observer can view the image stored in the PC 200 on the display connected to the different PC, perform various editing processing or the like, and make a final pathological diagnosis or the like.

### [Hardware structure of an example image pickup apparatus]

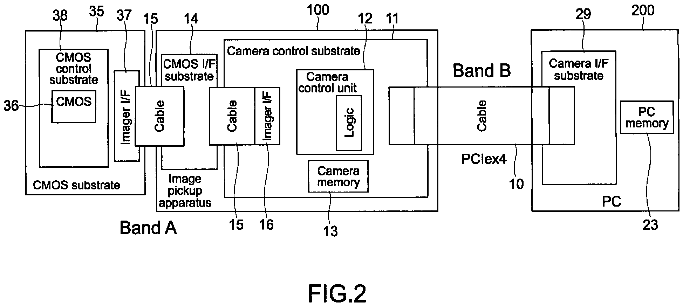

Fig. 2 is a block diagram showing a hardware structure of the image pickup apparatus 100 and an interface therearound.

As shown in Fig. 2, the image pickup apparatus 100 includes a camera control substrate 11 and a CMOS I/F (interface) substrate 14. To the camera control substrate 11, a cameral control unit 12 and a memory 13 are provided. The camera control unit 12 is structured as an FPGA (field programmable gate array), for example, and has a logic circuit therein. The memory (hereinafter, referred to as camera memory) 13 is a DRAM (dynamic random access memory) or the like, and functions as a buffer that stores an image read from a CMOS sensor 36 that is mounted on a CMOS control substrate 38.

On the camera control substrate 11 and the CMOS substrate 35, Imager I/Fs 16 and 37 in conformity with a predetermined communication standard are provided, respectively. The camera control substrate 11 and the CMOS substrate 35 are connected through the CMOS I/F substrate 14 and cables 15. The camera control unit 12 reads, through the cables 15, an image taken by the CMOS sensor 36 and stores the image in the camera memory 13. Further, under the control of the PC, the camera control unit 12 controls the operations of the CMOS sensor 36, the XYZ stage 31, and the flash light source 32. A control box dedicated to the XYZ stage may be provided separately from the camera control substrate 11.

On the other hand, to the PC 200, a memory (hereinafter, referred to as PC memory) 23 and a camera I/F substrate 29 for connection with the camera control substrate 11 are provided. As described above, the camera I/F substrate 29 of the PC 200 and the camera control substrate 11 of the image pickup apparatus 100 are connected with each other through the PCIe bus 10. The camera control unit transfers the image stored in the camera memory 13 to the PC memory 23 of the PC 200 via the PCIe bus 10. The PC memory 23 functions as a buffer for the image received.

The transfer of the image between the camera memory 13 and the PC memory 23 is performed by a DMA (direct memory access). In addition, the camera memory 13, the PCIe bus 10, and the PC memory 23 are structured as an FIFO (first in, first out). That is, the camera memory 13 functions as a transmission FIFO buffer and the PC memory 23 functions as a reception FIFO buffer.

Here, a bandwidth (band B in Fig. 2) of the transmission using the PCIe bus 10 is larger than a bandwidth (band A in Fig. 2) of the transmission using the cables 15 between the CMOS substrate 35 and the camera control substrate 11. With this structure, bulk raw data of a pathological image or the like obtained by the CMOS sensor 36 is smoothly transferred to the PC 200 side.

### [Hardware structure of an example PC]

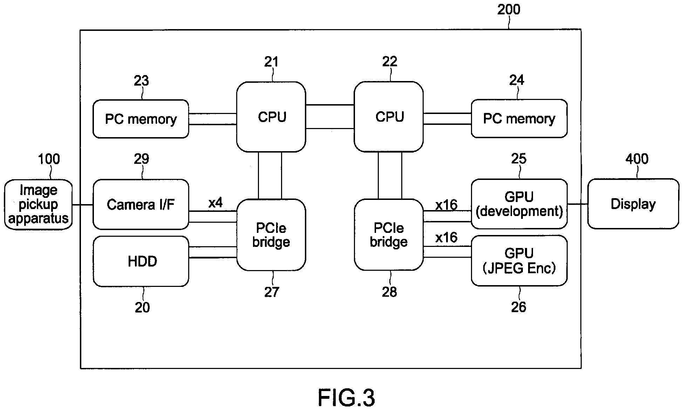

Fig. 3 is a block diagram showing the hardware structure of the PC 200. As shown in Fig. 3, the PC 200 includes CPUs 21 and 22 serving as a dual-core processor and the PC memory 23 and a PC memory 24 serving as the buffers corresponding to the CPUs 21 and 22, respectively. In each of the PC memories 23 and 24, a buffer for storing an image received from the image pickup apparatus 100 is provided. The buffer is formed as a redundant buffer such as a double buffer and a triple buffer. With this structure, even if the bulk raw data of the pathological image or the like is continuously transmitted from the image pickup apparatus 100 side via the PCIe bus 10, the bulk raw data can be stored by the buffer, and hence it is possible to prevent an error in transmission to the extent possible.

To the CPU 22, two GPUs 25 and 26 are connected through a PCIe bridge 28. For example, the GPU 25 performs a developing process on an image received from the image pickup apparatus 100, and the GPU 26 performs an encoding process on the image to a JPEG format or the like (to be described later in detail).

To the CPU 21, the camera I/F substrate 29 and an HDD 20 are connected through a PCIe bridge 27, for example. The image that has been received from the image pickup apparatus 100 and subjected to the developing process, the encoding process, and the like is stored in the HDD 20. In addition, various applications necessary for the developing process, the encoding process, and the like are also stored in the HDD 20.

### [Operation of an example image processing system]

Next, the operation of the image processing system structured as described above will be described.

### [Example pipeline process]

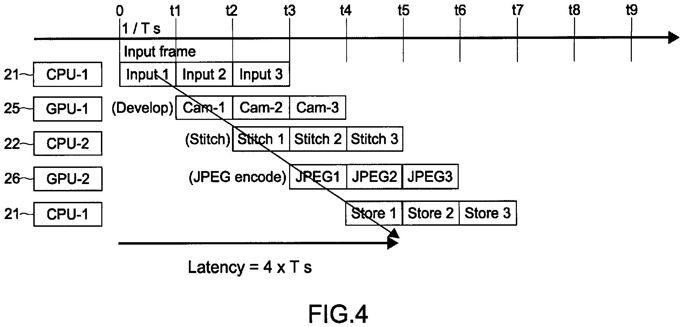

First, various image processing in the PC 200 will be described. Fig. 4 is a diagram showing a flow of the image processing.

In this example embodiment, the PC 200 can pipeline, in addition to the developing process and the encoding process, an input process, a stitching process, a storing process, and the like and perform those processes with respect to the image received from the image pickup apparatus 100 side and stored in the PC memories 23 and 24. The stitching process refers to a process of connecting a plurality of images to be one image.

That is, as shown in Fig. 4, the CPU 21 performs the input process on an image (frame) from the PC memories 23 and 24, for example. Subsequently, the GPU 25 performs the developing process on the input image, for example. Then, the CPU 22 performs the stitching process on the image after the developing process. Further, the GPU 26 performs the encoding (compressing) process on the image after the stitching process. In addition, the CPU 21 further performs the storing process of the image after the encoding process in the HDD 20, after the CPU 21 is released from the input process. The combinations of those various processes with the processors that perform the processes are not of course limited to the example shown in Fig. 4.

As described above, the PC 200 pipelines the five different processes with those parallel processors, for example, thereby making it possible to perform the image processing on the bulk raw data received via the PCIe bus 10 in real time as much as possible. As shown in Fig. 4, in the case where an input frame rate is set to Ts per frame, a latency from the input to the storage of one image (frame) becomes significantly small, specifically, 4^{∗}Ts, thanks to the pipeline process.

### [Example image pickup control process]

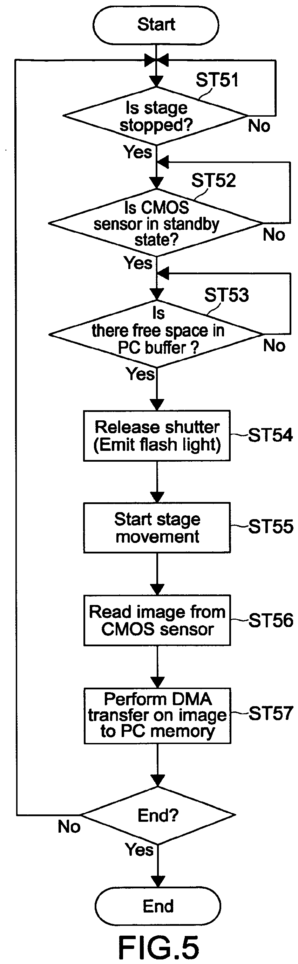

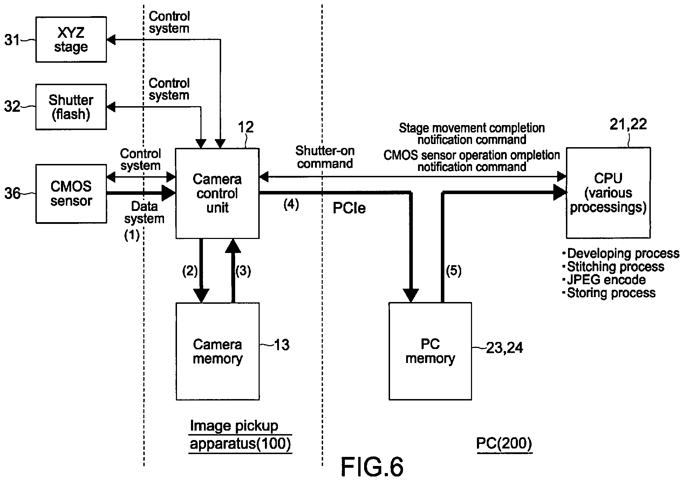

Next, a description will be given on an image pickup process by the image pickup apparatus 100 and a control process by the PC 200 with respect to the image pickup process. Those processes are performed in parallel with the pipeline process. Fig. 5 is a flowchart showing the image pickup process by the image pickup apparatus 100 and the PC 200. Further, Fig. 6 is a block diagram showing a control system in the image pickup process.

As shown in Fig. 5, first, the CPU 21 or 22 (hereinafter, collectively referred to as CPU 21 for convenience) of the PC 200 judges whether the XYZ stage 31 is in a stop state, that is, the movement thereof is completed or not (Step 51).

In the case where it is judged that the XYZ stage 31 is in the stop state (Yes), the CPU 21 judges whether the CMOS sensor 36 is in a standby state, that is, the CMOS sensor 36 is in an image-reading operation state to the camera memory 13 or not (Step 52).

In the case where it is judged that the CMOS sensor 36 is in the standby state (Yes), the CPU 21 judges whether the buffer of the PC memory 23 or 24 (hereinafter, collectively referred to as PC memory 23 for convenience) has a free space, that is, the volume of data in the buffer is less than a predetermined capacity or not (Step 53).

In the case where it is judged that the buffer of the PC memory 23 has the free space (Yes), the CPU 21 issues a shutter-on command to the camera control unit 12 and causes a shutter and the flash light source 32 to operate (Step 54).

Subsequently, when the shutter is released in response to the shutter-on command, the camera control unit 12 starts the movement of the XYZ stage 31 for the next image pickup (Step 55). Further, the camera control unit 12 reads, from the CMOS sensor 36, the image taken in response to the shutter-on command and stores the image in the camera memory 13 (Step 56, (1) and (2) of Fig. 6).

The camera control unit 12 reads the image stored in the camera memory 13 and performs a DMA transfer of the image to the PC memory 23 of the PC 200 (Step 57, (3) and (4) of Fig. 6).

In the PC 200, the image stored in the PC memory 23 is read, and the pipeline process described above is performed with the CPU 21, the GPU 25, and the like, and various applications ((5) of Fig. 6).

The image pickup apparatus 100 and the PC 200 repeatedly perform the above-mentioned processes until a specified number of images are taken and stored in the PC 200.

By the above-mentioned processes, in the image processing system according to this example embodiment, the movement of the XYZ stage 31 is completed during a time period when the image is read from the CMOS sensor 36 to the camera memory 13. In addition, a shutter timing is synchronous with the start of the movement of the XYZ stage 31. Further, the completion of the image reading process from the CMOS sensor 36 to the camera memory 13 is also synchronous with the shutter timing. As a result, a latency time is reduced by a time period necessary for the movement of the XYZ stage 31, and therefore the image is taken and processed at a higher speed.

In addition, in the image processing system according to this example embodiment, the shutter is released only when the three conditions that the PC memory 23 has the free space, the CMOS sensor 36 is in the standby state, and the XYZ stage 31 is in the stop state are met. Further, by this control, the PC 200 can perform a back pressure process of temporarily stopping the shutter operation by the image pickup apparatus 100 in the case where the PC memory 23 does not have the free space.

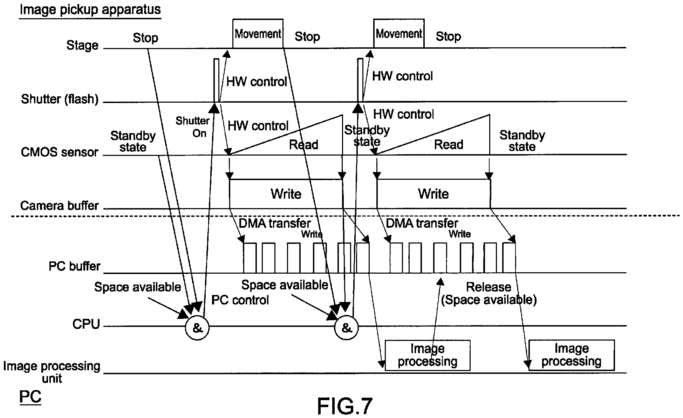

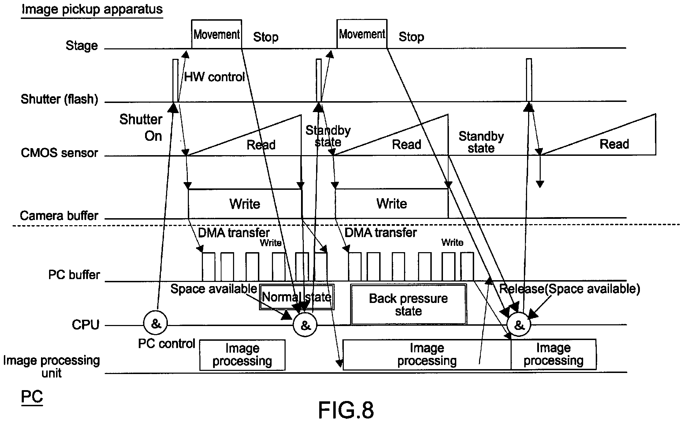

Fig. 7 is a timing chart showing an image pickup timing and the like in the image pickup process. Fig. 8 is a timing chart showing the case where the back pressure process is caused in the image pickup process.

As shown in Figs. 6 and 7, the camera control unit 12 monitors the state of the XYZ stage 31 and the CMOS sensor 36 and transmits, to the CPU 21 of the PC 200, notification signals (stage movement state notification command and CMOS sensor operation completion notification command) for making notifications of the stop of the XYZ stage 31 and the completion of the reading operation from the CMOS sensor 36 (standby state) as interrupt signals. The CPU 21 processes the notification signals as interrupt signals and monitors the capacity of the buffer of the PC memory 23. When the CPU 21 that a free space is generated (released) in the buffer, the CPU combines the conditions, to generate the shutter-on command. In synchronization with the issue of the shutter-on command, the processes of (1) to (5) of Fig. 6 are performed. The PC 200 is provided with an interrupt controller (not shown) for performing the interrupt process. By processing, as the interrupt signals, the conditions for the generation of the shutter-on command, the PC 200 can more flexibly arbitrate the conditions.

On the other hand, as shown in Fig. 8, in the case where a load is applied on the image processing by the CPU 21, the GPU 25, and the like, exceeding the predetermined capacity of the buffer of the PC memory 23, the third condition for the generation of the shutter-on command is not met. Accordingly, even when the stage movement state notification command and the CMOS sensor operation completion notification command are notified of, the issue of the shutter-on command is suspended, with the result that the CPU 21 is brought into the back pressure state.

In a normal state, which is not the back pressure state, a reading completion cycle from the CMOS sensor 36 is a critical path. In the back pressure state, a release of the buffer of the PC memory 23 is a critical path.

As a result, even in the case where it may be impossible to store the images in the PC memory 23 due to the increase in the load of the pipeline process, the PC 200 can prevent the defect in the image data in a continuous transfer of the images through the PCIe bus 10.

As described above, the camera memory 13 of the image pickup apparatus 100 and the PC memories 23 and 24 of the PC 200 are structured as the FIFO. Therefore, handshaking therebetween is unnecessary in performing the back pressure process. The CPUs 21 and 22 of the PC 200 just manages a queue of the FIFO, thereby allowing the back pressure process to be smoothly performed irrespective of the kind or state of a parallelism.

### Modified example]

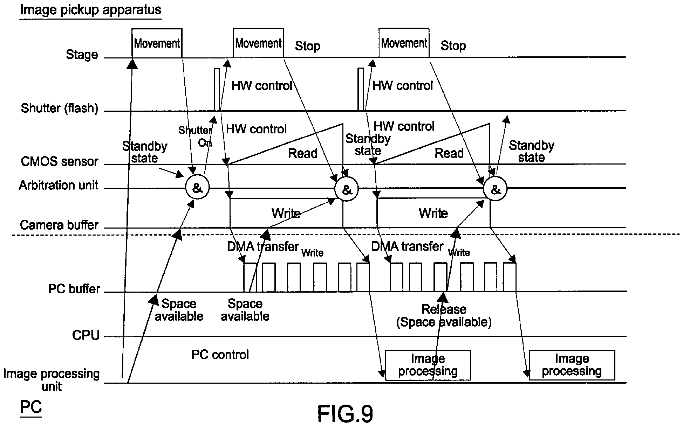

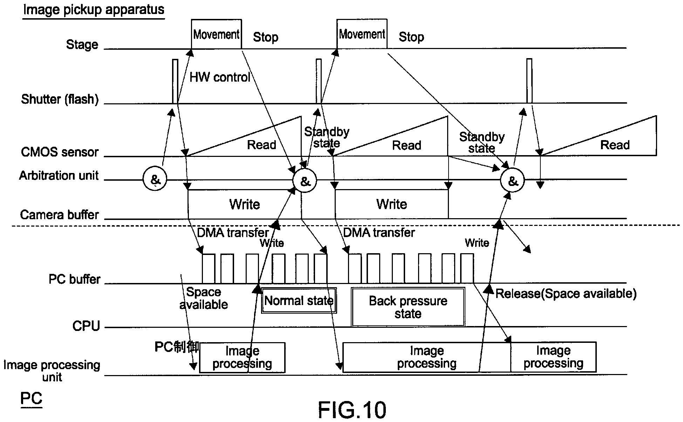

In the above example embodiment, the PC 200 processes and arbitrates the conditions for the generation of the shutter-on command as the interrupt signals. However, the arbitrating process may be performed on the image pickup apparatus 100 side. Fig. 9 is a timing chart showing an image pickup timing and the like in this case, and Fig. 10 is a timing chart showing the case where the back pressure process is generated in the example of Fig. 9.

As shown in Figs. 9 and 10, in this example, an arbitration unit is provided to the image pickup apparatus 100. The arbitration unit may be implemented as hardware or software. The arbitration unit monitors the operation state of the XYZ stage 31 and the CMOS sensor 36 to generate a condition relating thereto, and receives a notification signal as to a condition of a free space state of the PC memory 23 from the PC 200. Further, the arbitration unit combines the conditions to generate the shutter-on command, thereby causing the camera control unit 12 to release the shutter.

In addition, as shown in Fig. 10, even if the operation of the XYZ stage 31 and the CMOS sensor 36 is completed, the arbitration unit suspends the issue of the shutter-on command until the arbitration unit receives the notification signal relating to the conditions of the free space state of the PC memory 23 from the PC 200, thereby performing the back pressure process.

As described above, since the arbitration unit on the image pickup apparatus 100 side arbitrates the conditions for the generation of the shutter-on command, the handshaking between the image pickup apparatus 100 and the PC 200 is reduced, and the overhead on the PC 200 side is reduced. Further, since the shutter-on command is issued on the image pickup apparatus 100 side without the PC 200, the latency until the shutter is released is reduced.

Further, the generation processes of the conditions on the image pickup apparatus 100 side and on the PC 200 side may be combined. In other words, the condition that is desirable to be generated on the PC 200 side may be generated by the PC 200, and the arbitration unit that combines the condition on the PC 200 side and the condition on the image pickup apparatus 100 side may be provided on the image pickup apparatus 100 side. With this structure, the flexible arbitration by the PC 200 and the reduction in the latency are compatible with each other. The condition to be generated on the PC 200 side may be arbitrarily changed as appropriate.

The image pickup apparatus 100 and the PC 200 are connected by the PCIe in the above example embodiment, but may be connected by another general-purpose high-speed interface such as USB 3.0 instead. That is, any communication channel may be used for the transfer of the image from the image pickup apparatus to the PC, as long as the communication channel has a larger bandwidth than that used for the reading of the image from the CMOS sensor and has the bidirectional reliability.

In so far as the embodiments of the invention described above are implemented, at least in part, using software-controlled data processing apparatus, it will be appreciated that a computer program providing such software control and a transmission, storage or other medium by which such a computer program is provided are envisaged as aspects of the present invention.

## Claims

1. A method of operating an information processing system (100, 200) which includes an image pickup apparatus (100) operatively connected to a microscope (300) which has a stage (31) configured to support an observation target object (30), the stage (31) being in a first position and a memory device having a buffer (23) which has a free capacity to store data,
the method comprising:
determining whether the stage (31) moves or not;
determining whether the image pickup apparatus (100) is in a standby state or not;
determining whether the free capacity of the buffer (23) is larger than a predetermined capacity to store data;
if the stage (31) does not move, the image pickup apparatus (100) is in a standby state, and the free capacity of the buffer (23) is larger than a predetermined capacity to store data:
causing the image pickup apparatus (100) to capture an image of the observation target by transferring image data to a memory (13) of the image pickup apparatus (100),
thereafter causing the stage (31) to move from the first position to a second, different position and
causing transfer of the image data from the memory (13) to the buffer (23) for image processing, while the stage (31) is moving; wherein
the above steps are continuously repeated; and
if it is determined that the free capacity of the buffer (23) is smaller than the predetermined capacity to store data, causing the image pickup apparatus (100) to suspend capturing of images until the free capacity of the buffer (23) becomes again larger than the predetermined capacity to store data by releasing image data from the buffer (23).

2. The method of claim 1, wherein
it is determined whether the free capacity of the buffer (23) is larger than the predetermined capacity to store data by determining whether the free capacity of the buffer (23) is less than a maximum capacity amount.

3. The method according to any one of the preceding claims, wherein
the further image processing on the image data transferred to the buffer (23) comprises:
performing an input process;
thereafter, performing a developing process;
thereafter, performing a stitching process;
thereafter, performing an encoding process; and
thereafter, performing a storing process.

4. The method according to any one of the preceding claims, wherein
the image pickup apparatus (100) is caused to capture images by issuing a shutter-on command to the image pickup apparatus (100).

5. A computer-readable medium storing instructions structured to cause an information processing system (100, 200) to perform a method according to any one of claims 1 to 4.

## Patentansprüche

1. Verfahren zum Betreiben eines Informationsverarbeitungssystems (100, 200), das eine Bildaufnahmevorrichtung (100), die betriebsfähig mit einem Mikroskop (300) verbunden ist, welches einen Objekttisch (31) aufweist, der zum Stützen eines Beobachtungszielobjekts (30) konfiguriert ist, wobei der Objekttisch (31) in einer ersten Position ist, und ein Speichergerät mit einem Puffer (23) enthält, der eine freie Kapazität zum Speichern von Daten aufweist,
das Verfahren aufweisend:
Bestimmen, ob sich der Objekttisch (31) bewegt oder nicht;
Bestimmen, ob die Bildaufnahmevorrichtung (100) in einem Bereitschaftszustand ist oder nicht;
Bestimmen, ob die freie Kapazität des Puffers (23) größer als eine vorbestimmte Kapazität zum Speichern von Daten ist;
wenn sich der Objekttisch (31) nicht bewegt, die Bildaufnahmevorrichtung (100) in einem Bereitschaftszustand ist und die freie Kapazität des Puffers (23) größer als eine vorbestimmte Kapazität zum Speichern von Daten ist:
Bewirken, dass die Bildaufnahmevorrichtung (100) ein Bild des Beobachtungsziels durch Übertragen von Bilddaten an einen Speicher (13) der Bildaufnahmevorrichtung (100) erfasst,
danach Bewirken, dass sich der Objekttisch (31) aus der ersten Position in eine zweite, andere Position bewegt, und
Bewirken des Transfers der Bilddaten aus dem Speicher (13) zum Puffer (23) zur Bildverarbeitung, während sich der Objekttisch (31) bewegt; wobei
die obigen Schritte fortlaufend wiederholt werden; und,
wenn bestimmt wird, dass die freie Kapazität des Puffers (23) kleiner als die vorbestimmte Kapazität zum Speichern von Daten ist, Bewirken, dass die Bildaufnahmevorrichtung (100) das Erfassen von Bildern aussetzt, bis die freie Kapazität des Puffers (23) durch Freigeben von Bilddaten aus dem Puffer (23) wieder größer als die vorbestimmte Kapazität zum Speichern von Daten wird.

2. Verfahren nach Anspruch 1, wobei
bestimmt wird, ob die freie Kapazität des Puffers (23) größer als die vorbestimmte Kapazität zum Speichern von Daten ist, durch Bestimmen, ob die freie Kapazität des Puffers (23) geringer als eine maximale Kapazitätsmenge ist.

3. Verfahren nach einem der vorhergehenden Ansprüche, wobei
die weitere Bildverarbeitung der Bilddaten, die an den Puffer (23) übertragen werden, aufweist:
Ausführen eines Eingabeprozesses;
nachfolgendes Ausführen eines Entwicklungsprozesses;
nachfolgendes Ausführen eines Nähprozesses;
nachfolgendes Ausführen eines Codierprozesses; und
nachfolgendes Ausführen eines Speicherprozesses.

4. Verfahren nach einem der vorhergehenden Ansprüche, wobei
bewirkt wird, dass die Bildaufnahmevorrichtung (100) Bilder durch Ausgeben eines Blende-Ein-Befehls an die Bildaufnahmevorrichtung (100) erfasst.

5. Computerlesbares Medium, das Anweisungen speichert, die zum Bewirken strukturiert sind, dass ein Informationsverarbeitungssystem (100, 200) ein Verfahren nach einem der Ansprüche 1 bis 4 ausführt.

## Revendications

1. Procédé de fonctionnement d'un système de traitement d'informations (100, 200) qui comporte un appareil de prise d'images (100) fonctionnellement relié à un microscope (300) qui a une platine (31) configurée pour supporter un objet cible d'observation (30), la platine (31) étant dans une première position, et un dispositif de mémoire ayant un tampon (23) qui a une capacité libre pour stocker des données,
le procédé comprenant les étapes suivantes :
déterminer si la platine (31) bouge ou non ;
déterminer si l'appareil de prise d'images (100) est dans un état de repos ou non ;
déterminer si la capacité libre du tampon (23) est supérieure à une capacité prédéterminée pour stocker des données ;
si la platine (31) ne bouge pas, l'appareil de prise d'images (100) est dans un état de repos, et la capacité libre du tampon (23) est supérieure à une capacité prédéterminée pour stocker des données :
conduire l'appareil de prise d'images (100) à capturer une image de la cible d'observation en transférant des données d'image à une mémoire (13) de l'appareil de prise d'images (100),
ensuite, faire bouger la platine (31) de la première position à une deuxième position, différente et
provoquer le transfert des données d'image de la mémoire (13) au tampon (23) pour traitement de l'image, pendant que la platine (31) bouge ; dans lequel
les étapes ci-dessus sont répétées de façon continue ; et
s'il est déterminé que la capacité libre du tampon (23) est inférieure à la capacité prédéterminée pour stocker des données, l'appareil de prise d'images (100) est conduit à suspendre la capture d'images jusqu'à ce que la capacité libre du tampon (23) soit à nouveau supérieure à la capacité prédéterminée pour stocker des données en supprimant des données d'image du tampon (23) .

2. Procédé de la revendication 1, dans lequel
on détermine si la capacité libre du tampon (23) est supérieure à la capacité prédéterminée pour stocker des données en déterminant si la capacité libre du tampon (23) est inférieure à une quantité maximale de capacité.

3. Procédé selon l'une quelconque des revendications précédentes, dans lequel
le traitement d'image supplémentaire sur les données d'image transférées au tampon (23) comprend :
la réalisation d'un processus d'entrée ;
ensuite, la réalisation d'un processus de développement ;
ensuite, la réalisation d'un processus d'assemblage ;
ensuite, la réalisation d'un processus de codage ; et
ensuite, la réalisation d'un processus de stockage.

4. Procédé selon l'une quelconque des revendications précédentes, dans lequel
on conduit l'appareil de prise d'images (100) à capturer des images en envoyant une commande d'ouverture d'obturateur à l'appareil de prise d'images (100).

5. Support lisible par ordinateur stockant des instructions structurées pour conduire un système de traitement d'informations (100, 200) à effectuer un procédé selon l'une quelconque des revendications 1 à 4.
